(19) Europäisches Patentamt
European Patent Office
Office européen des brevets

(11) **EP 2 363 769 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
***G05B 19/042*** (2006.01) ***G06F 9/48*** (2006.01)

(21) Anmeldenummer: **10002234.2**

(22) Anmeldetag: **04.03.2010**

(54) **Verfahren zur Ermittlung der Lastverteilung eines Automatisierungssystems**

Method for determining the load distribution of an automation system

Procédé de détermination de la répartition de charge d'un système d'automatisation

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**07.09.2011 Patentblatt 2011/36**

(73) Patentinhaber: **SIEMENS AKTIENGESELLSCHAFT**
**80333 München (DE)**

(72) Erfinder: **Veith, Christian**
**76316 Malsch (DE)**

(56) Entgegenhaltungen:
**EP-A1- 1 598 715 EP-A2- 1 505 462**
**US-A1- 2008 046 895**

• **Alexander Buck: "Messung und Bewertung sequentieller und paralleler Programme" Universität Tübingen 17. Juli 1999 (1999-07-17), XP002595319 Gefunden im Internet: URL:http://www-ti.informatik.uni-tuebingen .de/~heim/ lehre/proseminar_ss99/ausarbeitu ng/alex_ buck/ausarbeitung.pdf [gefunden am 2010-08-03]**

**Beschreibung**

Die Erfindung betrifft ein Verfahren zur Ermittlung der Lastverteilung eines Automatisierungssystems, welches mit einer Anzahl von Verarbeitungseinheiten versehen ist, auf denen Programmteile zur Steuerung eines technischen Prozesses ablaufen.

Aus dem "Siemens-Katalog ST 70", Ausgabe 2009 sind unterschiedlich ausgebildete Automatisierungsgeräte bekannt, welche zur Lösung kleiner, mittlerer und größerer Automatisierungsaufgaben vorgesehen sind, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. In vielen Fällen werden eine Vielzahl von Automatisierungsgeräten oder -systemen miteinander vernetzt, wobei erst diese vernetzten Systeme überhaupt einen reibungslosen Betrieb von komplexen Anlagen ermöglichen. Insbesondere aufgrund dieser Vernetzung ist es erforderlich, dass ein Automatisierungssystem neben Steuerungsfunktionen auch Kommunikationsfunktionen verwirklicht. Darüber hinaus gibt es Anforderungen von überlagerten Beobachtungsebenen und Leitwarten an die Diagnosefunktionen und Auskunftsfunktionen eines Automatisierungssystems. Dies bedeutet, dass ein Automatisierungssystem überlastet sein kann, ohne dass dies für einen Anwender oder Anlagenbetreiber unmittelbar ersichtlich ist. Hinweise für eine derartige Überlastung ergeben sich gewöhnlich nur aufgrund zu langer Reaktionszeiten oder aufgrund von Telegrammverlusten.

Aus der EP 1 598 715 A1 ist ein Verfahren zur Ermittlung der Kommunikationslast eines Automatisierungssystems bekannt. Einer Systemeinheit eines Automatisierungssystems wird dazu ein Kontrollraum zugeordnet, wobei sowohl in diesen Kontrollraum eintretende als auch aus diesem austretende Kommunikationsereignisse erfasst werden. Hinweise auf eine Auslastung bzw. auf eine Lastverteilung eines vernetzten Automatisierungssystems, welches mehrere Verarbeitungseinheiten aufweist, sind aus der EP 1 598 715 A1 nicht zu entnehmen.

Dokument "Messung und Bewertung sequentieller und paralleler Programme", Alexander Buck, Universität Tübingen, 17. Juli 1999, beschreibt den Bezug eines Mehrprozessorsystems zu einem Einprozessorssystem, wobei Maßnahmen gezeigt werden, die Höhe des "Speedups" des Mehrprozessorsystems zu ermitteln.

EP 1 505 462 A2 offenbart ein Automatisierungsgerät, wobei Maßnahmen zur Verbesserung der Ausführung von Ablaufprogrammen auf diesem Automatisierungsgerät vorgesehen sind.

Der vorliegenden Erfindung liegt die Aufgabe zugrunde, ein Verfahren der eingangs genannten Art anzugeben, mittels dessen die Auslastung bzw. Lastverteilung eines mehrere Verarbeitungseinheiten aufweisenden Automatisierungssystems ermöglicht wird.

Diese Aufgabe wird durch die im kennzeichnenden Teil des Anspruchs 1 angegebenen Maßnahmen gelöst.

Vorteilhaft ist, dass neben der Kommunikationslast und der Restlast für jede der Verarbeitungseinheiten des Automatisierungssystems auch die Gesamt-Kommunikations- und Gesamt-Restlast ermittelt werden, welche einem Anwender angezeigt werden können, wobei die Lastverteilung auf der Erfassung bzw. Messung der Laufzeiten der ersten, zweiten und dritten Programmteile sowie der Leerläufe basiert. Dabei werden die Laufzeiten der Programmteile einer Verarbeitungseinheit umgekehrt proportional gewichtet mit der Leerlaufzeit, wodurch die Laufzeiten der höher belasteten Verarbeitungseinheit stärker gewichtet sind.

Die ersten Programmteile verwirklichen Kommunikationsfunktionen - sind also zur Bearbeitung von Kommunikationsaufgaben vorgesehen -, die zweiten verwirklichen Restfunktionen und die dritten sowohl Kommunikations- als auch Restfunktionen. Als eine Restfunktion wird z. B. die Bearbeitung von Steuerungsaufgaben angesehen. Unter Programmteilen werden sowohl Tasks, Threads und/oder sonstige geeignete (Anwender)-Programme bzw. Software-Bausteine zur Verwirklichung einer Funktion des Automatisierungssystems verstanden.

In einer Ausgestaltung der Erfindung gemäß den im Anspruch 2 angegebenen Maßnahmen werden eine relative Gesamt-Kommunikationslast und eine relative Gesamt-Restlast des Automatisierungssystems auf einer Anzeigeeinheit dargestellt, wodurch einem Anwender übersichtlich die Lastverteilung des Automatisierungssystems angezeigt wird. Dabei "orientiert" sich die ermittelte gewichtete relative Gesamt-Kommunikationslast und die gewichtete relative Gesamt-Restlast an der stärksten belasteten bzw. ausgelasteten Verarbeitungseinheit.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

Figur 1 Bestandteile eines Automatisierungssystems und
Figur 2 eine Anzeige einer Lastverteilung.

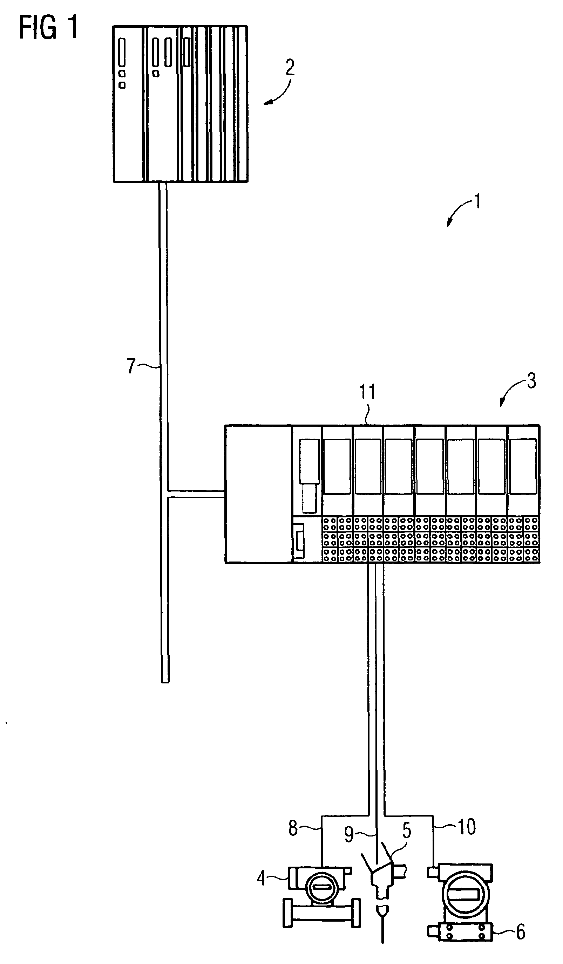

In Figur 1 sind mit 1 Teile eines Automatisierungssystems bezeichnet, welches ein Automatisierungsgerät 2, ein dezentrales Peripheriegerät 3 und mehrere Feldgeräte 4, 5, 6 aufweist. Das Automatisierungsgerät 2 sowie das dezentrale Peripheriegerät 3 weisen jeweils eine Verarbeitungseinheit sowie weitere Einheiten bzw. Baugruppen auf, z. B. Baugruppen in Form von Regler- und/oder Ein-/Ausgabe- und/oder sonstigen Funktions-Baugruppen, wobei die Einheiten bzw. Baugruppen über einen hier nicht dargestellten Rückwandbus miteinander verbunden sind. Selbstverständlich kann das Automatisierungssystem 1 je nach einer zu lösenden Steuerungsaufgabe mit weiteren Automatisierungsgeräten und/oder dezentralen Peripheriegeräten versehen sein. Darüber hinaus sind gewöhnlich das Automatisierungsgerät 2 sowie Systeme in Form eines Engineeringsystems, eines Bedien- und Beobachtungssystems, eines Asset-Management-Systems und/oder Servern an einen hier nicht dargestellten Bus angeschlossen. Das Automatisierungsgerät 2 ist über einen für hohe Kommunikationsgeschwindigkeiten ausgelegten Feldbus 7, z. B. in Form eines an sich bekannten Feldbusses "PROFIBUS DP", mit dem dezentralen Peripheriegerät 3 verbunden. Mit jeweils weiteren für die Prozessautomatisierung geeigneten Kommunikationsverbindungen sind die Feldgeräte 4, 5, 6 an ein Interface-Modul 11 des dezentralen Peripheriegerätes 3 angeschlossen.

Im Folgenden wird angenommen, dass lediglich eine Lastverteilung der mit $V_1$, $V_2$ bezeichneten Verarbeitungseinheiten des Automatisierungs- und des Peripheriegerätes 2, 3 ermittelt wird und dass diese Verarbeitungseinheiten erste, zweite und dritte Programmteile verarbeiten. Die ersten Programmteile verwirklichen im Wesentlichen Kommunikationsfunktionen, was bedeutet, dass diese Teile unmittelbar Kommunikationsfunktionen zuzuordnen sind. Die zweiten Programmteile verwirklichen sonstige Funktionen bzw. Restfunktionen, was bedeutet, diese Teile sind von Kommunikationsfunktionen vollständig unabhängig. Die dritten Programmteile verwirklichen sowohl Kommunikations- als auch Restfunktionen; diese Teile können also nicht eindeutig dem ersten oder zweiten Programmteil zugeordnet werden und stellen deshalb einen eigenen Programmteil dar.

Ferner wird angenommen, dass jeweils eine Task der Verarbeitungseinheiten $V_1$, $V_2$ während eines Beobachtungs-Zeitintervalls T die Laufzeiten der ersten, zweiten und dritten Programmteile sowie die Leerlaufzeit dieser jeweiligen Verarbeitungseinheiten $V_1$, $V_2$ misst. Die Task der Verarbeitungseinheit $V_2$ übermittelt die gemessenen Werte der Verarbeitungseinheit $V_1$, welche die Lastverteilung des Automatisierungssystems 1 - wie im Folgenden gezeigt wird - ermittelt. Selbstverständlich kann die Verarbeitungseinheit $V_2$ oder eine sonstige Verarbeitungseinheit, z. B. eine Verarbeitungseinheit einer an das Automatisierungssystem 1 angeschlossenen Maintenance- bzw. Asset-Management-Station, die Lastverteilung des Automatisierungssystems 1 ermitteln, wobei in diesem Fall der Verarbeitungseinheit $V_2$ oder dieser sonstigen Verarbeitungseinheit die Laufzeiten zu übermitteln sind.

Folgende Annahmen liegen im vorliegenden Ausführungsbeispiel für die Berechnung der Lastverteilung bzw. der Auslastung zugrunde:

Während des Beobachtungs-Zeitintervalls T wird für die Verarbeitungseinheit $V_1$ gemessen:

- Laufzeit $tk_1$ von ersten Programmteilen = 0,3T;
- Laufzeit $ts_1$ von zweiten Programmteilen = 0, 3T;
- Laufzeit $tks_1$ von dritten Programmteilen = 0,2T;
- Leerlaufzeit $tl_1$ = 0,2T.

Für die Verarbeitungseinheit $V_2$ wird während des Beobachtungs-Zeitintervalls T gemessen:

- Laufzeit $tk_2$ von ersten Programmteilen = 0,4T;
- Laufzeit $ts_2$ von zweiten Programmteilen = 0, 2T;
- Laufzeit $tks_2$ von dritten Programmteilen = 0,1T;
- Leerlaufzeit $tl_2$ = 0,3T.

Mittels der gemessenen Laufzeiten werden zunächst für jede der Verarbeitungseinheiten $V_1$, $V_2$ die Kommunikationslast-Laufzeit und die Restlast-Laufzeit errechnet, wobei allgemein gilt:

Kommunikationslast-Laufzeit:

$$Klt_i = tk_i + tks_i * \frac{tk_i}{tk_i + ts_i}, \quad i = 1, 2, \dots$$

Restlast-Laufzeit:

$$Rlt_i = ts_i + tks_i * \frac{ts_i}{tk_i + ts_i}, \quad i = 1, 2, \ldots$$

Für die Verarbeitungseinheit $V_1$ ergibt sich daher folgende Kommunikationslast-Laufzeit $Klt_1$:

$$Klt_1 = 0,3T + 0,2T * \frac{0,3T}{0,3T + 0,3T} = 0,4T$$

Die Restlast-Laufzeit der Verarbeitungseinheit $V_1$ ergibt sich daher zu:

$$Rlt_1 = 0,3T + 0,2T * \frac{0,3T}{0,3T + 0,3T} = 0,4T$$

Für die Verarbeitungseinheit $V_2$ ergibt sich eine Kommunikationslast-Laufzeit:

$$Klt_2 = 0,4T + 0,1T * \frac{0,4T}{0,4T + 0,2T} = 0,466T$$

Die Restlast-Laufzeit der Verarbeitungseinheit $V_2$ ergibt sich zu:

$$Rlt_2 = 0,2T + 0,1T * \frac{0,2T}{0,4T + 0,2T} = 0,233T$$

Die errechneten Kommunikationslast- und die errechneten Restlast-Laufzeiten werden umgekehrt proportional gewichtet mit den Leerlaufzeiten der jeweiligen Verarbeitungseinheit $V_1$, $V_2$, um eine Gesamt-Kommunikationslast $Kg$ und eine Gesamt-Restlast $Rg$ des Automatisierungssystems 1 zu errechnen. Aufgrund der umgekehrt proportionalen Gewichtung wird die stärker belastete Verarbeitungseinheit $V_1$ stärker gewichtet, obwohl die Kommunikationslast-Laufzeit $Klt_1$ geringer ist als die Kommunikationslast-Laufzeit $Klt_2$ der Verarbeitungseinheit $V_2$. Es gilt allgemein:

$$Kg = \sum \frac{Klt_i}{tl_i}, \quad i = 1, 2, \ldots$$

$$Rg = \sum \frac{Rlt_i}{tl_i}, \quad i = 1, 2, \ldots$$

Die Gesamt-Kommunikationslast $Kg$ und eine Gesamt-Restlast $Rg$ errechnen sich daher im vorliegenden Beispiel zu:

$$Kg = \frac{Klt_1}{tl_1} + \frac{Klt_2}{tl_2} = \frac{0,4T}{0,2T} + \frac{0,466T}{0,3T} = 2 + 1,5533 = 3,5533$$

und

$$Rg = \frac{Rlt_1}{tl_1} + \frac{Rlt_2}{tl_2} = \frac{0,4T}{0,2T} + \frac{0,233T}{0,3T} = 2 + 0,7776 = 2,7776$$

Die derart ermittelte Gesamt-Kommunikationslast und Gesamt-Restlast des Automatisierungssystems 1 können einem Anwender auf einer Anzeigeeinheit, z. B. auf einer Anzeigeeinheit der Maintenance- bzw. Asset-Management-Station, angezeigt werden.

Um eine übersichtlichere Darstellung der Lastverteilung zu ermöglichen, werden in weiteren Verfahrensschritten eine gewichtete relative Gesamt-Kommunikationslast $Kg_{grel}$ und eine gewichtete relative Gesamt-Restlast $Rg_{grel}$ ermittelt. Dazu werden zunächst eine auf eine Gesamtauslastung Ga=Kg+Rg bezogene relative Gesamt-Kommunikationslast $Kg_{rel}$ sowie eine auf diese Gesamtauslastung Ga bezogene relative Gesamt-Restlast $Rg_{rel}$ errechnet, wobei allgemein gilt:

$$Kg_{rel} = \frac{Kg}{Kg + Rg}$$

und

$$Rg_{rel} = \frac{Rg}{Kg + Rg}$$

Die relative Gesamt-Kommunikationslast $Kg_{rel}$ errechnet sich im vorliegenden Beispiel zu:

$$Kg_{rel} = \frac{3,5533}{3,5533 + 2,7776} = 0,5613$$

und die relative Gesamt-Restlast $Rg_{rel}$ zu:

$$Rg_{rel} = \frac{2,7776}{3,5533 + 2,7776} = 0,4387$$

In einem weiteren Schritt wird zur Bestimmung der gewichteten relativen Gesamt-Kommunikationslast $Kg_{grel}$ und der gewichteten relativen Gesamt-Restlast $Rg_{grel}$ ein Lastfaktor Lf der am stärksten belasteten Verarbeitungseinheit $V_1$, $V_2$ bestimmt. Im vorliegenden Beispiel ist die am stärksten ausgelastete Verarbeitungseinheit die Verarbeitungseinheit $V_1$, deren Leerlaufzeit - wie angenommen - 0,2T ist, d. h., die Verarbeitungseinheit $V_1$ ist zu 80% ausgelastet, was bedeutet, dass der Lastfaktor Lf=0,8 ist. Im Unterschied dazu ist die Verarbeitungseinheit $V_2$ lediglich zu 70% ausgelastet (Leerlaufzeit 0,3T). Eine derart ermittelte gewichtete relative Gesamt-Kommunikationslast $Kg_{grel}$ und gewichtete relative Gesamt-Restlast $Rg_{grel}$ „orientiert" sich also an der stärksten belasteten bzw. ausgelasteten Verarbeitungseinheit. Mittels dieses Lastfaktors Lf wird die gewichtete relative Gesamt-Kommunikationslast $Kg_{grel}$ und die gewichtete relative Gesamt-Restlast $Rg_{grel}$ errechnet zu:

$$Kg_{grel} = Kg_{rel} * Lf = 0,5613 * 0,8 = 0,449 \approx 0,5$$

und

$$Rg_{grel} = Rg_{rel} * Lf = 0,4387 * 0,8 = 0,351 \approx 0,35$$

Diese relative Gesamt-Kommunikationslast $Kg_{rel}$ und diese relative Gesamt-Restlast $Rg_{rel}$ des Automatisierungssystems 1 sind auf einer Anzeigeeinheit darstellbar, wodurch einem Anwender übersichtlich die Lastverteilung des Automatisierungssystems 1 angezeigt wird.

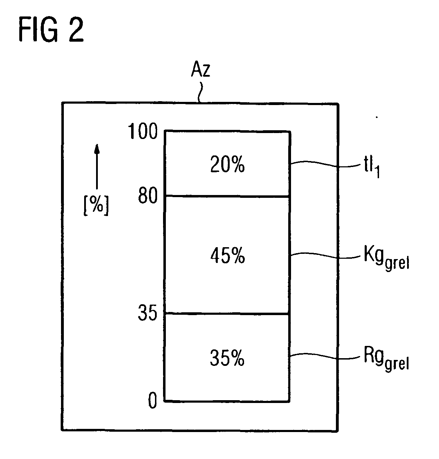

In diesem Zusammenhang wird auf Figur 2 verwiesen, in welcher eine Anzeige Az der Lastverteilung des Automatisierungssystems 1 dargestellt ist, wobei prozentual die ermittelte gewichtete relative Gesamt-Kommunikationslast $Kg_{grel}$, die ermittelte gewichtete relative Gesamt-Restlast $Rg_{grel}$ und die Leerlaufzeit $tl_1$ der am stärksten ausgelasteten Verarbeitungseinheit $V_1$ angezeigt sind. Auf die gewichtete relative Gesamt-Kommunikationslast $Kg_{grel}$ entfallen 45%, auf die gewichtete relative Gesamt-Restlast $Rg_{grel}$ 35% und auf den Leerlauf 20% der Belastung des Automatisierungssystems 1.

Im vorliegenden Ausführungsbeispiel wurde die Lastverteilung eines Automatisierungssystems ermittelt, welches ein Automatisierungsgerät und ein Peripheriegerät aufweist, die jeweils mit einer Verarbeitungseinheit versehen sind. Selbstverständlich ist das erfindungsgemäße Verfahren auch auf ein mit mehreren Verarbeitungs- bzw. CPU-Einheiten versehenes Automatisierungsgerät und/oder auf ein mit mehreren Verarbeitungs- bzw. CPU-Einheiten versehenes Peripheriegerät anwendbar. Allgemein ist der Begriff "Automatisierungssystem" für den Gesamtzusammenhang dieser Beschreibung so auszulegen, dass er sämtliche Geräte, Einrichtungen oder Systeme umfasst, also neben z. B. Steuerungen, wie speicherprogrammierbaren Steuerungen, Prozessrechnern, (Industrie-)Computern und dergleichen, auch Antriebssteuerungen, Frequenzumrichter und Ähnliches, wie sie zur Steuerung, Regelung und/oder Überwachung technischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

**Patentansprüche**

1. Verfahren zur Ermittlung der Lastverteilung eines Automatisierungssystems, welches mit einer Anzahl von Verarbeitungseinheiten $V_i$, i=1, 2, ... versehen ist, auf denen Programmteile zur Steuerung eines technischen Prozesses ablaufen, **gekennzeichnet durch** folgende Verfahrensschritte:

- während eines Zeitintervalls T werden für jede der Verarbeitungseinheiten $V_i$, i=1, 2, ... eine Leerlaufzeit $tl_i$, i=1, 2, ..., eine erste Laufzeit $tk_i$, i=1, 2, ... von ersten, eine zweite Laufzeit $ts_i$, i=1, 2, ... von zweiten und eine dritte Laufzeit $tks_i$, i=1, 2, ... von dritten Programmteilen erfasst, wobei die ersten Programmteile Kommunikationsfunktionen, die zweiten Restfunktionen und die dritten sowohl Kommunikations- als auch Restfunktionen verwirklichen,
- für jede Verarbeitungseinheit $V_i$, i=1, 2, ... wird eine Kommunikationslast-Laufzeit $Klt_i$ ermittelt gemäß der Beziehung:

$$Klt_i = tk_i + tks_i * \frac{tk_i}{tk_i + ts_i} , \quad i = 1, 2, ...$$

- für jede Verarbeitungseinheit $V_i$, i=1, 2, ... wird eine Restlast-Laufzeit $Rlt_i$ ermittelt gemäß der Beziehung:

$$Rlt_i = ts_i + tks_i * \frac{ts_i}{tk_i + ts_i}, \quad i = 1, 2, \ldots$$

- für das Automatisierungssystem wird die Gesamt-Kommunikationslast Kg ermittelt gemäß der Beziehung:

$$Kg = \sum \frac{Klt_i}{tl_i}, \quad i = 1, 2, \ldots$$

- für das Automatisierungssystem wird die Gesamt-Restlast Rg ermittelt gemäß der Beziehung:

$$Rg = \sum \frac{Rlt_i}{tl_i}, \quad i = 1, 2, \ldots$$

**2.** Verfahren nach Anspruch 1, **gekennzeichnet durch** die weiteren Verfahrensschritte:

- Ermitteln einer relativen Gesamt-Kommunikationslast $Kg_{rel}$ gemäß der Beziehung:

$$Kg_{rel} = \frac{Kg}{Kg + Rg}$$

- Ermitteln einer relativen Gesamt-Restlast $Rg_{rel}$ gemäß der Beziehung:

$$Rg_{rel} = \frac{Rg}{Kg + Rg}$$

- Ermitteln eines Lastfaktors Lf der am stärksten ausgelasteten Verarbeitungseinheit $V_i$, i=1, 2, ... aus den erfassten Leerlaufzeiten $tl_i$, i=1, 2, ... oder aus der Summe der Laufzeiten $tk_i$, $ts_i$, $tks_i$, i=1, 2, ... der ersten, zweiten und dritten Programmteile (Pk, Ps, Pks) der Verarbeitungseinheiten $V_i$, i=1, 2, ...,
- Ermitteln einer gewichteten relativen Gesamt-Kommunikationslast $Kg_{grel}$ gemäß der Beziehung:

$$Kg_{grel} = Kg_{rel} * Lf$$

- Ermitteln einer gewichteten relativen Gesamt-Restlast $Rg_{grel}$ gemäß der Beziehung:

$$Rg_{grel} = Rg_{rel} * Lf$$

**3.** Verfahren nach Anspruch 2, **dadurch gekennzeichnet, dass** die gewichtete relative Gesamt-Kommunikationslast $Kgg_{rel}$ und die gewichtete relative Gesamt-Restlast $Rg_{grel}$ auf einer Anzeigeeinheit angezeigt werden.

**Claims**

1. Method for determining the load distribution of an automation system which is provided with a number of processing units $V_i$, i = 1, 2, ..., on which program parts for controlling a technical process are running, **characterized by** the following method steps:

   - during a time interval T, for each of the processing units $V_i$, i = 1, 2, ..., an idling time $tl_i$, i = 1, 2, ..., a first running time $tk_i$, i = 1, 2, ... of first, a second running time $ts_i$, i = 1, 2, ... of second and a third running time $tks_i$, i = 1, 2, ... of third program parts are detected, wherein the first program parts implement communication functions, the second ones implement remaining functions and the third ones implement both communication and remaining functions,
   - for each processing unit $V_i$, i = 1, 2, ..., a communication load run time $Klt_i$ is determined according to the relation:

   $$Klt_i = tk_i + tks_i * \frac{tk_i}{tk_i + ts_i}, \quad i = 1, 2, ...$$

   - for each processing unit $V_i$, i = 1, 2, ..., a remaining-load run time $Rlt_i$ is determined according to the relation:

   $$Rlt_i = ts_i + tks_i * \frac{ts_i}{tk_i + ts_i}, \quad i = 1, 2, ...$$

   - for the automation system, the total communication load Kg is determined according to the relation:

   $$Kg = \sum \frac{Klt_i}{tl_i}, \quad i = 1, 2, ...$$

   - for the automation system, the total remaining load Rg is determined according to the relation:

   $$Rg = \sum \frac{Rlt_i}{tl_i}, \quad i = 1, 2, ...$$

2. Method according to Claim 1, **characterized by** the further method steps:

   - determining a relative total communication load $Kg_{rel}$ according to the relation:

   $$Kg_{rel} = \frac{Kg}{Kg + Rg}$$

   - determining a relative total remaining load $Rg_{rel}$ according to the relation:

   $$Rg_{rel} = \frac{Rg}{Kg + Rg}$$

   - determining a load factor Lf of the most heavily loaded processing unit $V_i$, i = 1, 2, ... from the detected idling

times $tl_i$, i = 1, 2, ..., or from the sum of the running times $tk_i$, $ts_i$, $tks_i$, i = 1, 2, ... of the first, second and third program parts (Pk, Ps, Pks) of the processing units $V_i$, i = 1, 2, ...,
- determining a weighted relative total communication load $Kg_{grel}$ according to the relation:

$$Kg_{grel} = Kg_{rel} * Lf$$

- determining a weighted relative total remaining load $Rg_{grel}$ according to the relation:

$$Rg_{grel} = Rg_{rel} * Lf$$

**3.** Method according to Claim 2, **characterized in that** the weighted relative total communication load $Kg_{grel}$ and the weighted relative total remaining load $Rg_{grel}$ are indicated on a display unit.

**Revendications**

**1.** Procédé de détermination de la répartition de charge d'un système d'automatisation, qui est pourvu d'un certain nombre d'unités $V_i$, i=1, 2,... de traitement sur lesquelles se déroulent des parties de programme pour la commande d'un processus technique, **caractérisé par** les stades de procédé suivants :

- pendant un intervalle T de temps, on relève pour chacune des unités $V_i$, i=1, 2,... de traitement un temps $tl_i$, i=1, 2, ... de marche à vide, un premier temps $tk_i$, i=1, 2, ... de marche de premières parties de programme, un deuxième temps $ts_i$, i=1, 2, ... de marche de deuxièmes parties de programme et un troisième temps $tks_i$, i=1, 2, ... de marche de troisièmes parties de programme, les premières parties de programme réalisant des fonctions de communication, les deuxièmes des fonctions restantes et les troisièmes à la fois des fonctions de communication et des fonctions restantes,
- pour chaque unité $V_i$, i=1, 2,... de traitement, on détermine un temps $klt_i$ de marche de charge de communication suivant la relation :

$$Klt_i = tk_i + tks_i * \frac{tk_i}{tk_i + ts_i}, \quad i = 1, 2, ...$$

- pour chaque unité $V_i$, i=1, 2,... de traitement, on détermine un temps $Rlt_i$ de marche de charge restante suivant la relation :

$$Rlt_i = ts_i + tks_i * \frac{ts_i}{tk_i + ts_i}, \quad i = 1, 2, ...$$

- pour le système d'automatisation, on détermine la charge Kg de communication totale suivant la relation :

$$Kg = \sum \frac{Klt_i}{tl_i}, \quad i = 1, 2, ...$$

- pour le système d'automatisation, on détermine la charge Rg restante totale suivant la relation :

$$Rg = \sum \frac{Rlt_i}{tl_i}, \quad i = 1, 2, \ldots$$

2. Procédé suivant la revendication 1, **caractérisé par** les autres stades de procédé :

- détermination d'une charge $Kg_{rel}$ de communication totale relative suivant la relation :

$$Kg_{rel} = \frac{Kg}{Kg + Rg}$$

- détermination d'une charge $Rg_{rel}$ restante suivant la relation :

$$Rg_{rel} = \frac{Rg}{Kg + Rg}$$

- détermination d'un facteur Lf de charge de l'unité $V_i$, i=1, 2,... de traitement la plus chargée à partir des temps $tl_i$, i=1, 2,... de marche à vide relevés ou à partir de la somme des temps $tk_i$, $ts_i$, $tks_i$, i=1, 2, ..., de marche des premières, deuxièmes et troisièmes parties (Pk, Ps, Pks) de programme des unités $V_i$, i=1, 2,... de traitement,
- détermination d'une charge $Kg_{grel}$ de communication totale relative pondérée suivant la relation :

$$Kg_{grel} = Kg_{rel} * Lf$$

- détermination d'une charge $Rg_{grel}$ restante totale relative pondérée suivant la relation :

$$Rg_{grel} = Rg_{rel} * Lf$$

3. Procédé suivant la revendication 2, **caractérisé en ce que** l'on affiche la charge $Kg_{grel}$ de communication totale relative pondérée et la charge $Rg_{grel}$ restante totale relative pondérée sur une unité d'affichage.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1598715 A1

- EP 1505462 A2

**In der Beschreibung aufgeführte Nicht-Patentliteratur**

- Siemens-Katalog ST 70. 2009

- **ALEXANDER BUCK.** *Messung und Bewertung sequentieller und paralleler Programme,* 17. Juli 1999